Europäisches Patentamt

European Patent Office

Office européen des brevets

(11) Numéro de publication: **0 149 925**
**A1**

(12) **DEMANDE DE BREVET EUROPEEN**

(21) Numéro de dépôt: **84400130.5**

(22) Date de dépôt: **20.01.84**

(51) Int. Cl.⁴: **B 65 G 57/06**
**B 65 G 57/24**

(43) Date de publication de la demande:
**31.07.85 Bulletin 85/31**

(84) Etats contractants désignés:
**AT BE CH DE GB IT LI LU NL SE**

(71) Demandeur: **SAINT-HUBERT Industrie Laitière
870, rue Denis-Papin Zone Industrielle
F-54710 Ludres Meurthe-et-Moselle(FR)**

(72) Inventeur: **Kubler, Claude
457, rue Debussy
F-54710 Ludres(FR)**

(72) Inventeur: **Munch, Raymond
Sexey les Bois
F-54840 Gondreville(FR)**

(74) Mandataire: **Chevallier, Robert Marie Georges
Cabinet BOETTCHER 23, rue La Boétie
F-75008 Paris(FR)**

(54) Perfectionnement apporté aux machines de chargement des palettes de transport.

(57) Les chariots (16,17) qui sont déplaçables le long des montants (2,3) ont une partie inférieure (20) en rétrécissement qui dégage vers l'extérieur de ces montants (2,3) un espace libre (21) dans lequel se trouvent les roues inférieures de renvoi (12,13) quand les chariots (16,17) sont à leur position la plus basse, tandis que l'extrémité inférieure de la partie (20) en rétrécissement est munie d'une aile horizontale inférieure (23) qui sert de support à un profilé (24) sur l'aile inférieure duquel glisse la tôle de réception et de transfert (19) si bien que celle-ci descend assez bas pour charger une palette posée directement sur le sol (14).

./...

Fig:1

Perfectionnement apporté aux machines de chargement des palettes de transport.

L'invention se rapporte aux machines de chargement automatique des palettes à partir de paquets individuels arrivant les uns derrière les autres sur un transporteur. L'invention a pour objet un perfectionnement apporté aux chariots élévateurs qui portent, dans une machine de chargement automatique des palettes, une tôle de réception et de transfert des paquets arrivant par un transporteur en provenance d'une machine de conditionnement.

Dans les machines connues de chargement automatique, la palette à charger est déposée sur une plateforme qui est en surélévation par rapport au sol sur lequel repose cette machine. Que les palettes soient ainsi surélevées n'est pas gênant quand elles sont déplacées par un chariot élévateur à fourche, à l'état vide ou à l'état chargé. Sur un chariot élévateur, la fourche est déplaçable en hauteur jusqu'à un niveau très élevé de sorte qu'il n'existe aucune difficulté à prendre une palette quelle que soit l'importance de la distance au-dessus du sol de la plateforme sur laquelle elle repose.

Mais il est impossible de fournir une palette vide à une telle machine de chargement ou d'en retirer une palette chargée à l'aide d'un appareil à main de déplacement des charges, appelé transpalette, dont la fourche ne peut être soulevée au-dessus du sol que d'une distance faible, en sens vertical, juste suffisante à décoller du sol la charge à déplacer.

L'invention a pour but principal de parvenir à une machine de chargement automatique des palettes d'une conception nouvelle permettant de poser chaque palette sur le sol, afin que tout transpalette à main puisse s'engager sous une palette chargée et la déplacer en dehors de la machine ou, inversement, puisse venir placer une palette à l'intérieur de la machine de chargement.

Dans une machine de chargement automatique des palettes, il existe un portique comprenant deux montants espacés à profil approprié pour qu'ils servent de chemin de guidage respectivement chacun à un chariot à déplacement vertical. Ces deux chariots sont réunis par des traverses et servent à supporter entre eux un cadre horizontal dans lequel une tôle de réception et de transfert est montée déplaçable horizontalement entre deux positions extrèmes. Sur cette tôle est constituée une couche de paquets qui arrivent un à un par un transporteur. Quand la couche est complète, la tôle est déplacée jusqu'au-dessus de la palette, au niveau voulu et l'ensemble des paquets est déposé sur la palette par retrait de la tôle pendant qu'une barre d'arrêt retient ces paquets.

Dans les machines connues, les chariots sont construits d'une façon tout à fait classique ; le cadre contenant la tôle de réception et de transfert est supporté par une zone médiane de chaque chariot située entre deux zones extrèmes où sont montés les galets de roulement. Ce mode de construction se justifie parce que des chaînes de déplacement en sens vertical sont fixées aux chariots, Ces chaînes s'étendent verticalement dans les montants du portique entre des roues dentées motrices supérieures et des roues dentées inférieures de renvoi. Ces dernières sont disposées à la base de chacun des montants. La place qu'elles occupent s'oppose à la descente des chariots jusqu'en bas des montants, ce qui explique pourquoi la plateforme de réception des palettes est surélevée au-dessus du sol. La difficulté à surmonter pour pouvoir faire reposer sur le sol les palettes à charge n'est donc pas due seulement à l'emplacement donné sur chaque chariot au cadre contenant la tôle de réception et de transfert, mais aussi à l'existence des roues dentées inférieures de renvoi à la base des montants du portique.

En réalité, la difficulté est plus grande encore parce que la tôle de réception et de transfert est déplaçable horizontalement dans le cadre qui la contient, grâce à une chaîne horizontale qui est supportée et guidée à l'intérieur de ce cadre par des pignons dentés. Il convient donc
de ménager la place nécessaire aux pignons dentés et à la
circulation des chaînes horizontales en donnant au cadre
horizontal une dimension suffisante en sens vertical.

On atteint le but visé par l'invention en donnant
à chacun des chariots déplaçables dans les montants du
portique un profil ayant dans le plan du portique une partie
inférieure en rétrécissement vers son extrémité inférieure
et dégageant un espace libre du côté extérieur de chaque
montant. A l'intérieur du portique l'extrémité inférieure
de cette partie en rétrécissement présente une aile horizontale qui constitue le support de la partie inférieure du
cadre horizontal sur laquelle la tôle de réception et de
transfert est déplaçable en translation. Les roues dentées
de renvoi placées au bas de chaque montant se trouvent dans
l'espace libre ménagé par le chariot correspondant mis à
sa position la plus basse sur ce montant et les chaînes sont
attachées au chariot dans la partie supérieure de ce dernier.

Il est possible que les ailes horizontales des
chariot soient pourvues de patins de glissement sur lesquels
repose et coulisse la tôle de réception et de transfert.

Selon un mode de réalisation préféré de l'invention,
l'aile horizontale sert de support à l'aile inférieure d'un
profilé en ⌐ de hauteur suffisante à contenir des pignons
sur lesquels circulent la chaîne de déplacement de la tôle
de réception et de transfert ; ce profilé est accolé par
son âme placée verticalement à la partie inférieure
rétrécie du chariot correspondant.

On donnera maintenant, sans intention limitative et
sans exclure aucune variante équivalente, une description
d'un mode préféré de réalisation de l'invention. On se
reportera aux dessins annexés dans lesquels :

- la figure 1 est une vue générale d'une extrémité
d'une machine de chargement de palettes conforme à l'invention,

- la figure 2 est une vue partielle agrandie montrant un chariot conforme à l'invention faisant partie de la machine de la figure 1.

Dans ce qui suit on limitera la description aux indications générales propres à montrer où se situe l'invention sur une machine de chargement de palettes et on décrira en détail les parties concernées par l'invention.

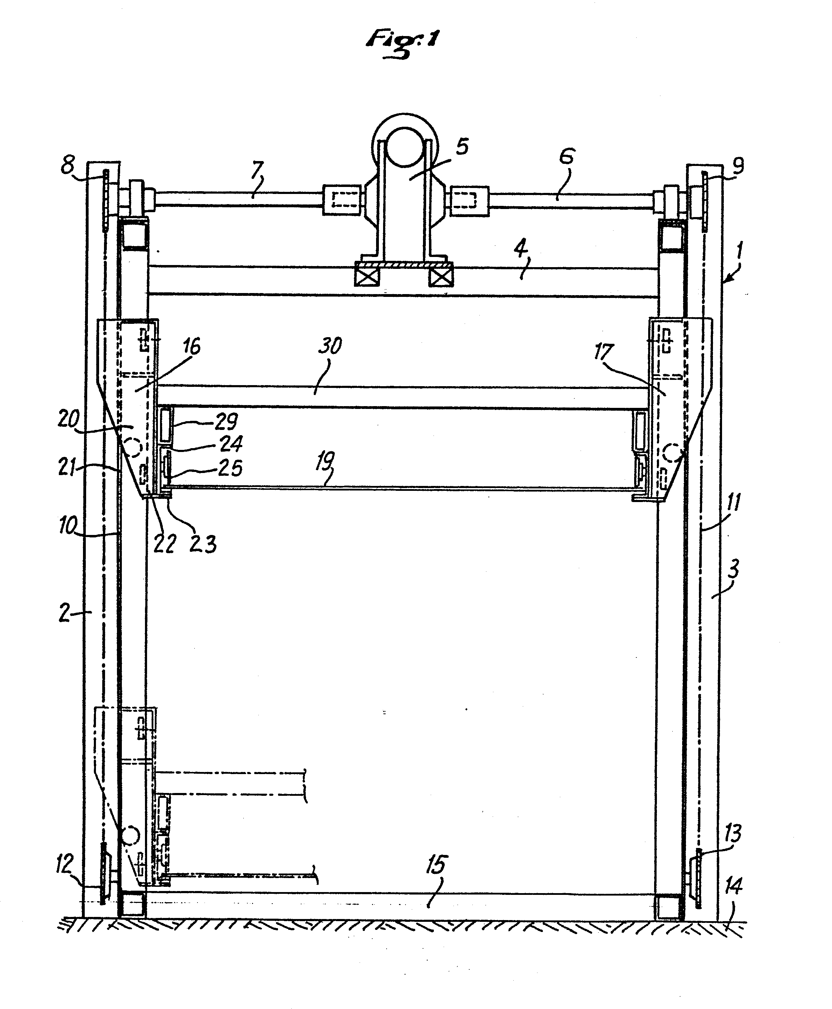

Une machine selon l'invention comprend un portique 1 à deux montants espacés 2, 3 réunis par une traverse supérieure 4 sur laquelle est monté un groupe moteur 5. Ce dernier entraîne deux arbres 6, 7 horizontaux sur lesquels sont calés en haut de chacun des montants 2, 3 deux roues dentées respectives 8, 9. A partir de celles-ci, deux chaînes 10, 11 s'étendent jusqu'au pied des montants 2, 3 où se trouvent deux roues dentées de renvoi 12, 13. Ces deux montants 2, 3 sont ancrés par leur extrémité inférieure dans un sol ou un plancher 14 au niveau duquel ils sont reliés par une traverse inférieure 15. Celle-ci se trouve dans le plan du portique. Les palettes à charger ne se posent pas sous le portique 1 mais d'un côté de celui-ci, par exemple en avant du plan de la figure 1.

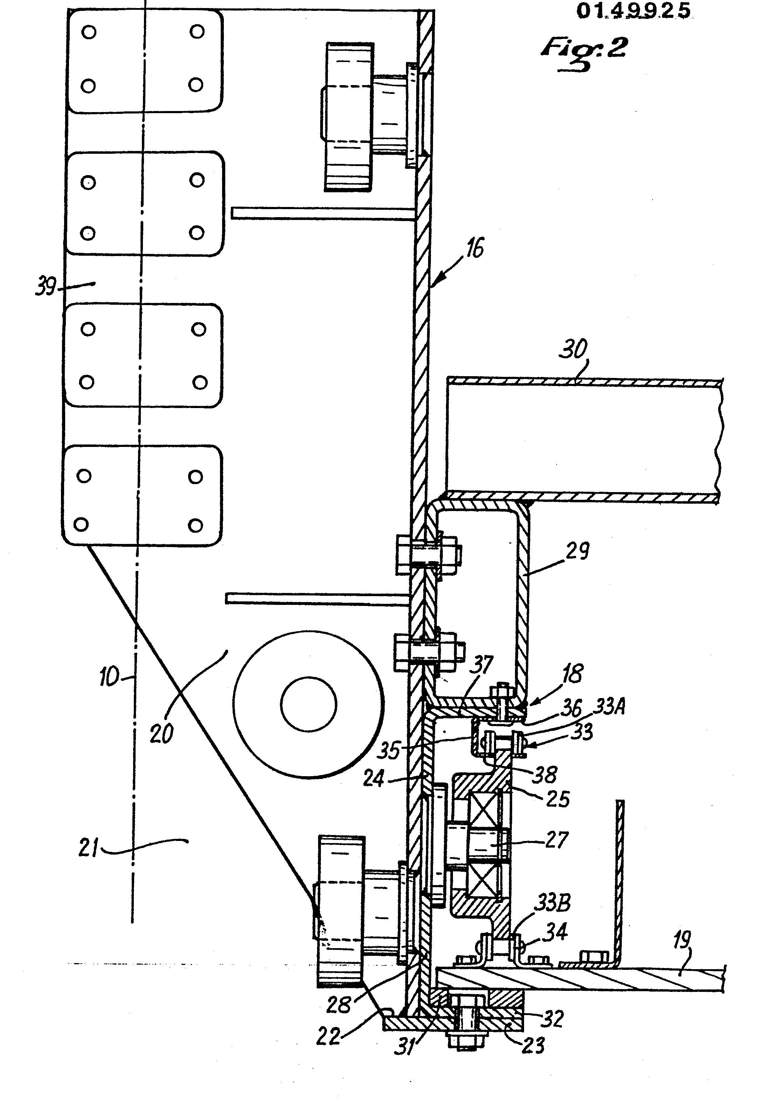

Sur chacun des deux montants 2, 3 est monté libre en déplacement un chariot 16, 17 respectivement. Les deux chariots sont symétriques ; un seul d'entre eux, le chariot 16, mieux visible sur la figure 2, sera donc décrit. Les deux chariots 16, 17 supportent entre eux un cadre horizontal 18 dans lequel est montée déplaçable en sens horizontal une tôle de réception et de transfert 19 de couches de paquets à déposer successivement sur une palette.

Chaque chariot 16, 17 est allongé en sens vertical et il a une partie inférieure trapézoïdale 20 en rétrécissement vers son extrémité inférieure. Ce rétrécissement laisse libre un espace 21 du côté extérieur du montant 2 ou 3 le long duquel il se déplace. L'extrémité inférieure 22 de la

5   0149925

partie trapézoïdale 20 présente une aile horizontale 23 dirigée vers l'intérieur du portique 1. Cette aile 23 sert de support à l'aile inférieure d'un profilé 24 en ⌐ allongé horizontalement. Ce profil 24 a une hauteur suffisante à contenir des pignons dentés espacés 26 supportés chacun par un axe horizontal 27 qui s'étend à l'intérieur du profilé 24 à partir de l'âme 28 de celui-ci. Cette âme 28 est accolée et solidement fixée par sa face extérieure au chariot 16.

Au-dessus du profilé 24 est également fixé au chariot 16 un élément tubulaire à profil rectangulaire 29. Les deux éléments tubulaires opposés 29 des deux chariots 16, 17 sont réunis à une de leurs extrémités par une traverse 30. On obtient ainsi un cadre horizontal servant au déplacement horizontal de la tôle 19. Celle-ci repose sur des patins de glissement 31 qui sont fixés sur la face intérieure de l'aile inférieure 32 de chaque profilé 24 en ⌐ . Une chaîne horizontale 33 engrène avec chaque pignon denté 26, à la partie supérieure et à la partie inférieure de ces derniers, par un brin supérieur 33A et par un brin inférieur 33B. Ce dernier est pourvu d'attaches espacées 34 qui sont fixées aussi à la tôle 19. Ce brin supérieur 33A de la chaîne 33 est soutenu entre les pignons dentés 25 par un profilé horizontal en U 35 dont une branche 36 est fixée à la branche supérieure 37 du profilé 24 et dont l'autre branche 38 s'étend entre les pignons 25 sous le brin supérieur 33A. Les mouvements alternatifs de la chaîne 33 imposent les mêmes mouvements à la tôle 19 qui glisse sur les patins 31.

De cette façon, la tôle 19 est placée à la partie la plus basse de chaque chariot 16, 17. Ces derniers sont attachés chacun respectivement aux chaînes verticales 10, 11, par leur partie supérieure 39 qui surmonte la partie inférieure 20 rétrécie en trapèze. Ainsi, les roues dentées inférieures 12, 13 montées à la base des montants 2, 3 du portique 1, ne sont pas rencontrées par les chariots 16, 17 mais se trouvent dans l'espace 21 laissé libre par ceux-ci. Ces chariots 16, 17 peuvent donc descendre presque jusqu' au pied des montants 2,3 ; comme la tôle de transfert 19 est elle-même située très près de l'extrémité inférieure des chariots 16,17 elle peut atteindre, au plus bas, une position peu élevée au-dessus du sol 14, comme dessiné en trait mixte en bas de la partie gauche de la figure 1. Ainsi la tôle peut transférer une première couche de paquets sur une palette posée directement sur le sol 14.

En variante, l'aile horizontale 23 des chariots 16, 17 et l'aile inférieure 32 des profilés en ⌐ 24 pourraient être confondues en une seule aile sur laquelle circulerait la tôle 19. Dans tous les cas il existe donc, selon l'invention, une aile horizontale inférieure disposée à l'extrémité inférieure des chariots 16, 17 et servant, directement ou indirectement, de support à la mise en place de la tôle 19.

REVENDICATIONS

1. Machine à charger automatiquement les palettes, comprenant un portique (1) à deux montants espacés (2,3) le long de chacun desquels s'étendent des chaînes verticales d'entraînement (10, 11) qui passent autour de roues de renvoi inférieures (12, 13) et le long de chacun desquels sont déplaçables des chariots (16,17) supportant entre eux un cadre horizontal dans lequel des chaînes 33 déplacent horizontalement une tôle de réception et de transfert (19) caractérisée en ce que les chariots (16,17) ont chacun une partie inférieure (20) en rétrécissement dégageant vers l'extérieur des montants (2,3) un espace libre (21) dans lequel se trouve les roues de renvoi inférieures (12, 13) quand les chariots (16,17) occupent leur position la plus basse.

2. Machine selon la revendication 1, caractérisée en ce que la partie inférieure (20) en rétrécissement des chariots (16,17) est surmontée d'une partie supérieure (39) par laquelle ils sont attachés aux chaînes verticales (10,11).

3. Machine selon la revendication 1, caractérisée en ce que la partie en rétrécissement (20) est trapézoïdale.

4. Machine selon la revendication 1, caractérisée en ce que la partie en rétrécissement (20) des chariots (16, 17) se termine par une extrémité inférieure (22) munie d'une aile horizontale (23) servant de support pour la mise en place de la tôle de réception et de transfert (19).

5. Machine selon la revendication 4, caractérisée en ce que chaque aile horizontale (23) supporte un profilé en ⌐ (24) dont l'aile inférieure (32) est munie d'une patin de glissement (31) sur lequel repose et glisse la tôle de réception et de transfert (19).

*Fig.1*

2/2

01.49.925

Fig: 2

**0149925**

Numero de la demande

Office européen
des brevets

**RAPPORT DE RECHERCHE EUROPEENNE**

EP 84 40 0130

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-2 453 803 (OCME) | | B 65 G 57/06 <br> B 65 G 57/24 |

-----

| | | | DOMAINES TECHNIQUES RECHERCHES (Int. Cl. ³) |
|---|---|---|---|
| | | | B 65 G |

Le présent rapport de recherche a été établi pour toutes les revendications

| Lieu de la recherche <br> LA HAYE | Date d'achèvement de la recherche <br> 11-09-1984 | Examinateur <br> OSTYN T.J.M. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

-----

& : membre de la même famille, document correspondant

OEB Form 1503. 03.82